# EUROPEAN PATENT APPLICATION

(11) **EP 0 681 230 A1**
(43) Date of publication of application: **08.11.1995**
(21) Application number: 95302673.9
(22) Date of filing: 21.04.1995
(51) Int. Cl.: G05D 1/03

(54) **Navigation system**

(30) Priority: 02.05.1994 US 236820
(71) Applicant: GENERAL ELECTRIC COMPANY, Schenectady, NY 12345 (US)
(72) Inventor: Corby, Nelson Raymond, Jr., Scotia, New York 12302 (US)
(74) Representative: Pratt, Richard Wilson

(57) **Abstract**

A system provides a position and orientation (P&O) of a vehicle in a known environment. An environment model is constructed from known parameters. A coarse P&O (90) unit provides approximate vehicle location information of the vehicle to an environment feature extractor (20b) which extracts three-dimensional (3D) identifying characteristics of the environment near the coarse vehicle location. A spatial imaging device (11) provides a vision signal to a vision feature extractor (20a) which extracts identifying two-dimensional (2D) features from the vision signal. A feature-based matcher (70) compares the extracted 2D and 3D features to identify an observation P&O in which the 3D model features will appear as the 2D image features. This observation P&O, after correcting for relative camera displacements between the vehicle and spatial imaging device, is used as the P&O of the vehicle, and also used to determine the inherent error of the coarse locating unit. This error is used to adjust the coarse locating unit's readings until another match is obtained between the 2D and 3D features.

## Description

### BACKGROUND OF THE INVENTION

### 1. Field of the Invention

The present invention relates to position and orientation determination within a known environment, and more specifically to a system that employs computer vision to determine the position and orientation.

### 2. Description of Related Art

Typically there is a need to determine a position and orientation of a vehicle having an imaging sensor, such as a video camera. For example, there is a need to determine the position and orientation of vehicles used to inspect and/or repair machines or manmade structures in environments that are inaccessible or hazardous for humans. Several such environments would be inside a nuclear reactor pressure vessel, inside a large pump, in a burning building, deep beneath the sea or in space. The high or low temperatures, radiation exposure, pressures, toxic effects or restricted sizes encountered in such environments clearly make access by humans very difficult or impossible.

Typically the machines or structures within these environments have been inspected and repaired by remotely operated vehicles. Usually the geometry of objects and structures in these environments are known from blueprints of other plans. The vehicles used employ a means of propelling themselves around their environment. In a fluid, like water, the means of propulsion may be a number of propellors driven by electric motors. The means of propulsion may also be powered wheels or tracks in the case of a terrestrial vehicle. In space, small thruster jets may be employed.

In order to perform the inspection task, the vehicles must know where they are and how to get to a desired position and orientation of the next destination. Existing systems today make use of position sensing systems that are placed within the environment of the vehicle, which determine the position and/or orientation of the vehicle by exploiting one of many physical effects. One example is a position sensing system using SONAR for position and orientation determination within an open nuclear reactor pressure vessel. SONAR pulses transmitted by a set of emitters on the vehicle are received by a set of underwater microphones attached to the walls of the water filled pressure vessel. Position and orientation is determined by measuring the time of flight of the SONAR pulses as they travel through the water. Unfortunately, the time taken by the SONAR pulses to travel are a function of the temperature of the water. In the case of nuclear reactor boilers, the temperature of the water in the vessel can vary greatly from one point to another, making it necessary to compensate or correct the indicated position and orientation. Such compensation techniques requiring mapping continuously changing water temperature gradients and can be very complicated. The complexity of the compensation system causes the position and orientation system to be costly and slow. Often what is needed is a system which can give varying accuracy - a somewhat coarser result when the vehicle is travelling through regions with relatively few obstacles and a more accurate measurement when the vehicle is travelling through more constricted regions.

Currently, there is need for a system which can accurately and economically determine the position and orientation of a vehicle in a known environment.

### SUMMARY OF THE INVENTION

A position and orientation (P&O) system for measuring the current position and orientation of a vehicle in a known environment employs an environment modeler for constructing an environment model of said known environment from predetermined parameters.

A spatial imaging device, attached to the vehicle, views the environment from an observation P&O.

A coarse locating unit determines a coarse P&O of said vehicle.

The coarse P&O is provided to an environment feature extractor which three-dimensional (3D) environment features in the environment model which correspond to the region visible from the coarse P&O.

A vision feature extractor is coupled to the imaging device for identifying 2D vision features in the vision signal.

A feature-based matcher matches 3D environment features with 2D vision features and identifies an observation P&O in which the 3D features would appear as the 2D vision features.

The observation P&O, adjusted for spatial imaging device offset results in the actual P&O of the vehicle, is provided to a correction unit which determines correction information that when combined with the vehicle's P&O, results in a highly accurate measurement of P&O.

### DETAILED DESCRIPTION OF THE INVENTION

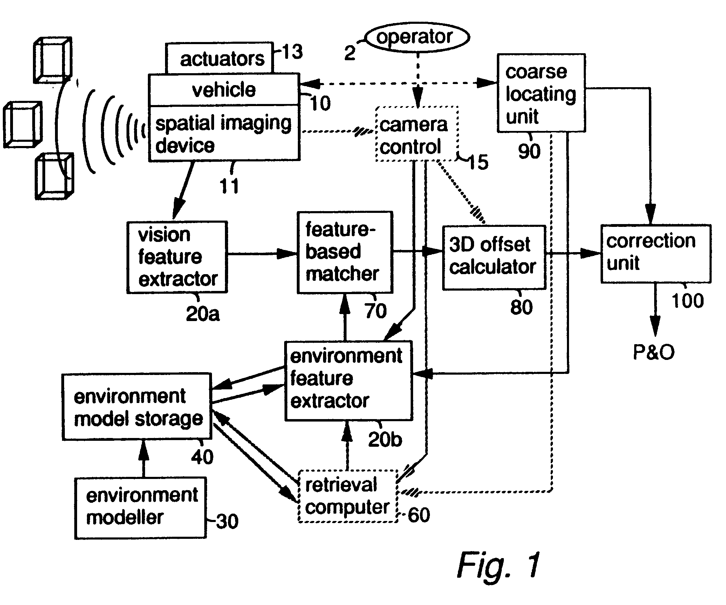

Figure 1 is a simplified block diagram of the major components of a system for producing a highly accurate estimate of the continuously varying position and orientation of a vehicle in a known environment.

Parameters defining an environment, such as blueprint, position and shape measurements from actual structures are provided to an environment modeler 30. Environment modeler 30 constructs a computer model of the geometry of the environment from these parameters. The environment model captures the shape, size and appearance of the objects that comprise the environment. The environment model is stored for later use in an environment model storage device 40.

A vehicle 10, intended to travel through the environment, employs a plurality of actuators 13 which propel and position the vehicle in the environment. In a nuclear reactor boiler environment filled with water, actuators 13 are electric motors attached to propellors. In space environment, the actuators may be small rocket thrusters. These actuators move the vehicle in a number of directions and rotate it to a desired orientation.

A coarse locating unit 90 determines an approximate position (x,y,z) and orientation (α,β,γ), collectively "P&O", of the vehicle within the environment. This may be, for example, SONAR sound sources dispersed at known locations around the environment which successively emit a signal. Multiple sensors mounted at known locations on the vehicle sense the signals from the SONAR sources. A receiver attached to the sensors determines the P&O of the vehicle based on differences in the time of reception of the transmitted signal measured by each detector. There may be more than one coarse locating unit 90.

A spatial imaging device 11 is carried by vehicle 10. Imaging device 11 acquires information about objects or structures within the environment, and produces a vision signal. Spatial imaging device 11, in its most common form is a video camera. Spatial imaging device 11 may form images from visible light or from energy emitted by the structure, such as heat energy. Spatial imaging device may also form 3D images of structures using special distance measuring devices such as SONAR or Light Detection and Ranging (LIDAR) which produce 3D images by acquiring measurements of the distances from the imaging sensor, to a large number of points on the surface of an object in the environment. Typically, the points on the surface of the object are arranged in a regular two dimensional grid. Spatial imaging device 11 is used for two purposes: first, inspection of specified structures by the operator after the vehicle has arrived at a specified location; and second, for the image-based navigation while the vehicle is enroute to a specified site.

In an alternative embodiment, a camera control unit 15 may be carried by vehicle. Camera control unit 15 sets camera control parameters which include zoom ratio, field-of-view, and aperture opening dealing with the image acquisition along with parameters defining the current geometric orientation and position of the imaging axis of spatial imaging device 11. In an alternative embodiment, spatial imaging device 11 is mounted at the end of a movable arm attached to the vehicle. Camera control parameters sensed by camera control unit 15 may be continuously measured over time.

A vision feature extractor 20a receives the vision signal from spatial imaging device 11 and extracts essential geometric features from the vision signal, 'vision features'. These features compactly summarize the shapes, sizes and appearances of objects in the vision signal. A single spatial imaging device results in a vision signal which is a two-dimensional image of three-dimensional (3D) objects viewed from a specific vantage point. Typical features may be lines defining the boundary between two contiguous regions of constant intensity (an "edge") or vertices formed when three areas of constant intensity meet.

In a 3D image, the features are 3D. For example, if an object (say cube) is modeled in 3D, it may consist of six square facets meeting at 12 edges and 8 vertices. Each vertex is a 3-D structure consisting of three lines and the point of the intersection. Each line has 3 degrees of freedom which specify it.

If a 3-D imaging device images a real cube shaped object, it will generate three-dimensional data points which lie on the planar facets of the cube. These points may be processed so that the visible points can be represented by 3 planes (fitted to the points) or by 2-3 3-D lines or vertices.

Environment feature extractor 20b selects a portion of the environment model visible from the coarse P&O provided by coarse locating unit 90 and identifies 3D features in the environment model. Typical 3D features may be three dimensional line segments which form the boundary between two differing regions or 3D vertices which are formed when three different regions intersect.

In an alternative embodiment, a retrieval controller 60 receives current approximate position and orientation information from coarse locating unit 90 as well as information specifying the current position and orientation of spatial imaging unit 11 relative to vehicle 10. Retrieval controller 60 then determines the approximate field-of-view of spatial imaging unit 11 with respect to the environment. A portion of environment model pertaining to the coarse position of vehicle 10 large enough to include at least the field-of-view is retrieved from environment model storage device 40 and passed to environment feature extractor 20b.

A feature based matcher 70 receives the vision features identified by environment feature extractor 20b and receives 3D features of the environment model (corresponding to one or more objects) from environment feature extractor 20b connected to retrieval controller 60. Matcher 70 then determines which, if any, of the 3D features would match vision features if viewed from a proper viewing point. When a match is found, matcher 70 determines a viewing position and orientation of spatial imaging device 11 with respect to the environment that would cause the 3D features of the environment to appear as the recognized vision features.

Many conventional methods may be used to match the 3D environment features to the 2D vision features as described in: "Fast Affine Point Matching: An Output-Sensitive Method" Daniel P. Huttenlocher, "Fast Affine Point Matching: An Output-Sensitive Method" by Daniel P. Huttenlocher, Proceedings of 1991 IEEE Computer Society Conference on Computer Vision and Pattern Recognition, pps. 263-268; "Determining the Attitude of 3-D Objects from a Single Perspective View" by M. Dhome, M. Richetin, J. LaPrieste, and G. Rives, *IEEE Trans. on Pattern Analysis and Machine Intelligence* vol. 11, No. 10, Dec. 1989, pp. 1265-1278; "Space and Time Bounds on Indexing 3-D Models from 2-D Images" by D. Clemens, and D. Jacobs, *IEEE Trans. on Pattern Analysis and Machine Intelligence* vol. 13, No. 10, Oct. 1991, pp. 1007-1017; "Model-Based Orientation-Independent 3-D Machine Vision Techniques" by R. DeFigueiredo, and N. Kehtarnavaz, *IEEE Trans. on Aerospace and Electronic Systems* vol 24, no. 5, Sept. 1988, pp. 597-607.

Since spatial imaging device 11 may be positioned on an extendable arm, the viewing position and orientation may be adjusted by position and orientation offsets from camera control 15. A 3D offset calculator 80 then calculates the position and orientation of the vehicle with respect to the environment at the time the image was taken. This highly accurate estimate of vehicle position and orientation is sent to a correction unit 100 which calculates the current error of coarse locating unit 90 which will be used to correct readings from coarse locating unit 90 until other vision features are matched to 3D environment features.

Correction unit 100 produces a corrected estimate of the vehicle's P&O which may be used to control actuators 13.

## Claims

1. A system for accurately determining a position and orientation (P&O) of a vehicle in a known environment comprising:
a) an environment modeler for constructing an environment model of said known environment from predetermined parameters;
b) an environment model storage coupled to the environment modeler for storage of the constructed environment model;
c) a spatial imaging device attached to said vehicle for creating a vision signal having a field-of-view of the environment from an observation P&O;
d) a coarse locating unit for determining a coarse P&O of said vehicle;
e) an environment feature extractor coupled to the environment model storage and the coarse locating unit, for identifying three-dimensional (3D) environment features in the environment model which are potentially visible within a predetermined region corresponding to the coarse P&O;
f) a vision feature extractor coupled to the imaging device for identifying 2D vision features in the vision signal;
g) a feature-based matcher coupled to the P&O unit, environment feature extractor, and the vision feature extractor for identifying the observation P&O in which 3D environment features would appear as the detected 2D vision features;
h) a correction unit coupled to the coarse locating unit and the feature-based matcher for receiving the observation point, and for receiving the coarse P&O and calculating P&O correction information, which when combined with the coarse P&O results in a highly accurate measurement of P&O.

2. The system for accurately determining a position and orientation (P&O) of a vehicle of claim 1 further comprising: a camera control for setting and monitoring a plurality of imaging parameters of the spatial imaging device, and moving the spatial imaging device to a relative P&O with respect to said vehicle, and for providing the imaging parameters and the relative P&O to correction unit to offset the P&O correction terms calculated by the correction unit.

3. The system for accurately determining a position and orientation (P&O) of a vehicle of claim 2 further comprising: a retrieval computer coupled to the environment storage, the camera control unit, the environment feature extractor and the coarse locating unit for determining the approximate field-of-view of spatial imaging unit and for retrieving a portion of environment model from environment model storage device pertaining to the coarse P&O of vehicle, the portion being large enough to include at least the field-of-view, and passing this portion on to the environment feature extractor.
